# EUROPEAN PATENT SPECIFICATION

(11) **EP 0 980 055 B1**
(45) Date of publication and mention of the grant of the patent: **19.09.2001**
(21) Application number: 99305353.7
(22) Date of filing: 06.07.1999
(51) Int. Cl.: G07F 17/24, G07F 7/02

(54) **Wireless parking meter**
Drahtlose Parkuhr
Parcmètre sans fil

(30) Priority: 14.07.1998 US 114852
(43) Date of publication of application: 16.02.2000
(73) Proprietor: LUCENT TECHNOLOGIES INC., Murray Hill, New Jersey 07974-0636 (US)
(72) Inventor: Sneed, Elbert Lee, Jr., Wheaton, Illinois 60187 (US); Sneed, Kathryn K., Wheaton, Illinois 60187 (US)
(74) Representative: Buckley, Christopher Simon Thirsk

(56) References cited:
- WO-A-94/20330
- GB-A- 2 035 641
- GB-A- 2 271 658
- GB-A- 2 298 510
- US-A- 4 532 418
- US-A- 5 648 906
- US-A- 5 777 951

## Description

### Background Of The Invention

This invention relates generally to parking meters. More specifically, this invention relates to an improved parking meter that accepts payment in several forms, including credit cards, such that the number of parking tickets issued is reduction.

When an individual puts coins into a parking meter, he or she is sometimes unable to return to his or her car before the allotted time purchased from the parking meter expires. Typically, a "meter maid" or other employee of the municipality that owns and operates the parking space and parking meter will have to periodically check the meter to determine whether the meter has expired. If the time purchased through the meter expires while the vehicle is still parked in the parking space, and if the "meter maid" becomes aware of that situation, a ticket will be issued.

Upon returning to a car with a parking ticket on it, most individuals get relatively frustrated by having received a parking ticket. Depending upon the circumstances surrounding the issuance of the ticket and the attitude of the person receiving the ticket, a municipality or corporation may have difficulty collecting the parking fine. As such, a parking meter that allows an individual to swipe his or her credit card, debit card, phone card, or the like, and allows parking fees to accumulate during the time the vehicle is parked, while avoiding the need to issue and to try to collect parking tickets would benefit municipalities and drivers alike.

A parking meter is known from US-A-5 777 951 that operates with prepaid parking intervals. According to US-A-5 648 906 and WO-A-9 420 330 a parking timer is reset to zero when a vehicle leaves a parking space.

The parking meter disclosed in GB-A-2 298 510 requires user intervention before a calculation of parking fees is done.

### Summary Of The Invention

It is therefore an object of this invention to provide a wireless parking meter capable of accepting payment via credit card, debit card, phone card, or the like, thereby allowing parking fees to accumulate during the time a vehicle is parked, while avoiding the need to issue and to try to collect parking tickets. This will benefit both individuals, who will receive fewer parking tickets, and municipalities who will experience an increase in revenue from parking fees and a reduction in costs due to the issuance, and attempted collection, of fewer parking tickets.

Against this background, there is provided a parking meter as defined in claims 1 or 10, and a method as defined in claim 8.

A preferred wireless parking meter comprises a vehicle detector; a processor, a radio transmitter and receiver, and a payment acceptor. When a vehicle is detected in the parking spot being monitored, the operator of the vehicle is provided a certain amount of time within which to swipe a payment card or insert money. If the operator swipes a payment card, the card reader transfers the payment information to the processor which sends that information to a payment verification service via the radio transmitter. If the chosen payment method is invalid, or if no payment actions are taken, a notification message can be sent via the radio transmitter so that the owner or operator of the parking space is made aware of the unauthorized parking. If valid payment actions have been taken, a timer and vehicle detector measure how long a vehicle remains parked in the parking space. If currency is used to pay for parking and if the vehicle remains in the parking space when the time purchased from the meter expires, the owner or operator of the parking space is notified of the unauthorized parking. For payment by credit, debit, or telephone card, when the vehicle leaves, the parking fee is calculated and charged to the card used by the vehicle operator.

### Brief Description Of The Drawings

FIG. 1 is a simplified block diagram showing wireless parking meters, wireless network components, and entities with which a wireless parking meter may communicate.

FIG. 2 is a simplified block diagram of a wireless parking meter according to this invention,

FIG. 3 is a simplified block diagram of the vehicle detector.

FIG. 4 is a simplified block diagram of the velocity detector shown in Fig. 3.

FIG. 5 is a simplified block diagram of the preferred embodiment of the position detector shown in FIG. 3.

FIG. 6 is a simplified block diagram of the preferred embodiment of the size detector shown in FIG. 3.

FIG. 7 is a simplified block diagram of an alternate embodiment of the position detector shown in FIG. 3.

FIG. 8 is a simplified block diagram of an alternate embodiment of the size detector shown in FIG. 3.

FIG. 9 and FIG. 10 are a simplified flow chart showing some of the basic functions performed by the wireless parking meter of this invention.

FIG. 11 and FIG. 12 are a simplified flow chart showing some of the basic functions performed by the mobile switching center according to an alternative embodiment of this invention.

### Detailed Description Of The Invention

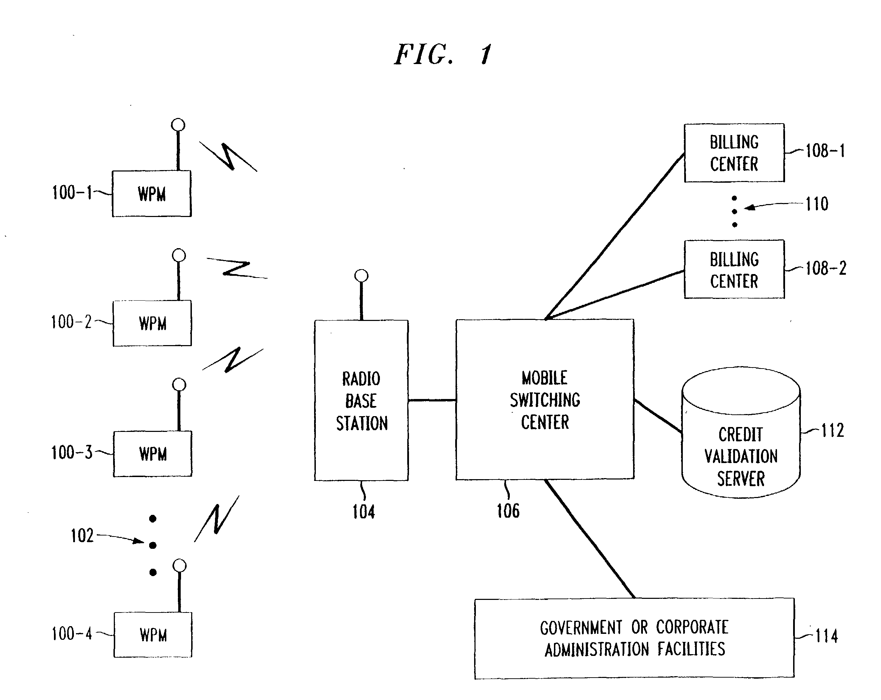

FIG. 1 shows wireless parking meters 100-1, 100-2, 100-3, and 100-4 (collectively referred to as 100). Vertical ellipses 102 indicates that there a plurality of wireless parking meters envisioned as being used in accordance with this invention, but are not shown in FIG. 1. Radio base station 104 is coupled to Mobile switching center 106 through an appropriate transmission line, data port, or the like. Mobile switching center 106 is coupled to billing center 108-1 and billing center 108-2 through similar media. Vertical ellipses 110 indicates that inclusion of additional billing centers are contemplated but are not shown in FIG. 1. Mobile switching center 106 is also coupled to credit validation server 112 and to government or corporate administration facilities 114 typically through an appropriate telephone link. As will be apparent to those having ordinary skill in the art, wireless parking meter 100 is an edge device, similar to a cellular telephone or a personal computer, in the publicly switched telephone network. As such, communication between wireless parking meter 100 and billing centers 108-1 and 108-2, credit validation server 112, and government or corporate administration facilities 114 is carried through the network in a transparent fashion.

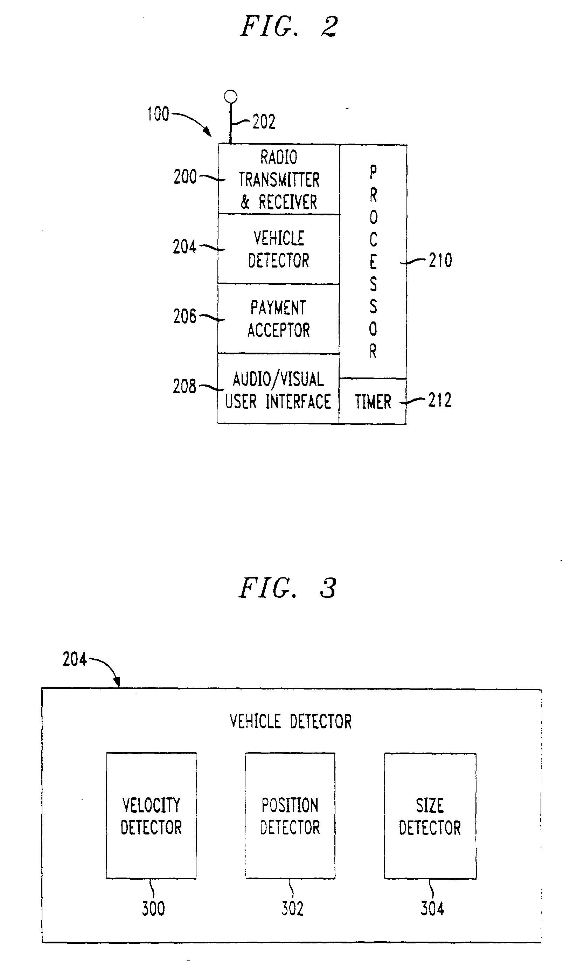

FIG. 2 is a simplified block diagram of a wireless parking meter 100. Wireless parking meter 100 comprises: radio transmitter and receiver 200, which includes antenna 202; vehicle detector 204; payment acceptor 206; audio/visual user interface 208; processor 210; and timer 212. As will be apparent to those skilled in the art, payment acceptor 206 could be a magnetic card reader or a conventional coin and/or currency acceptor. Similarly, audio/visual user interfaces are well known in the prior art and any user interface such as an LCD, LED or analog timer visual display and/or a speaker, and the like could be used. Processor 210 could be any general purpose processor, digital signal processor, microcontroller, or the like. Radio transmitter and receiver could be any transmit and receive radio waves in any known fashion using any known data protocol, many of which are well known in the art, without departing from the scope of this invention.

FIG. 3 is a simplified block diagram of vehicle detector 204. Vehicle detector comprises velocity detector 300, position detector 302, and size detector 304. The presence of a vehicle in a designated area or parking space is detected measuring velocity, position, and size of any object present in the parking space in question. Velocity, position, and size individually are each necessary, but not sufficient, conditions by themselves for detecting the presence of a vehicle in the designated parking space. By combining results from velocity detector 300, position detector 302, and size detector 304, this invention detects a vehicle entering, being present in, and leaving a designated parking space as a function of velocity, position, and size.

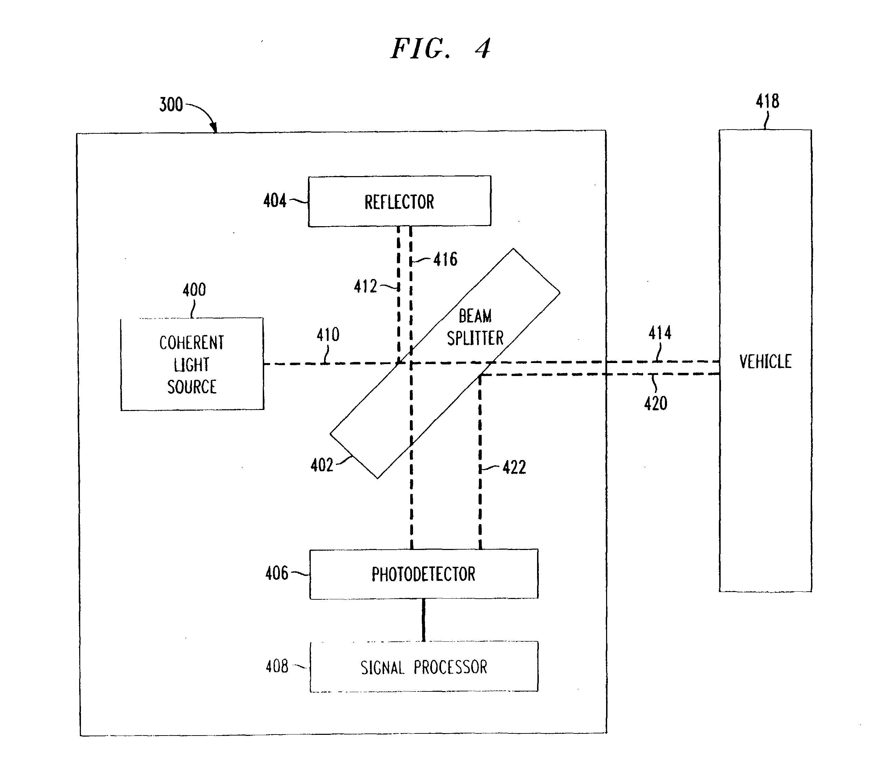

FIG. 4 is a simplified block diagram of velocity detector 300. Velocity detector 300 comprises coherent light source 400, beam splitter 402, reflector 404, photodetector 406, and signal processor 408. Coherent light source 400 emits light beam 410. Beam splitter 402 splits light beam 410 into two light beams: light beam 412 directed toward reflector 404 and light beam 414 directed toward the designated parking space. Light beam 416 is light beam 412 reflected by reflector 404. Light beam 416 is directed toward photodetector 406 by reflector 404.

If vehicle 418 is present in the designated parking space, vehicle 418 will reflect light beam 414 back toward beam splitter 402, as depicted by light beam 420. Beam splitter reflects light beam 420 toward photodetector 406, as depicted by light beam 422. If vehicle 418 is moving, light beams 420 and 422 will have slight frequency shift relative to the frequency of light beams 410, 412, 414, and 416. This frequency shift caused by the motion of vehicle 418 is well known in the prior art and is commonly referred to as the Doppler Effect.

Photodetector 406 measures either the number of beats or the distance between beats of the frequency of light beam 416 and the frequency of light beam 422. Signal processor 408, which is coupled to photodetector 406, then calculates the velocity of vehicle 418, which velocity is proportional to the Doppler shift between light beams 422 and 416. A condition that is necessary, but not sufficient, for detection of a vehicle entering, being present in, and leaving the designated parking space is the detected velocity, if any, being between a predetermined minimum value and a predetermined maximum value.

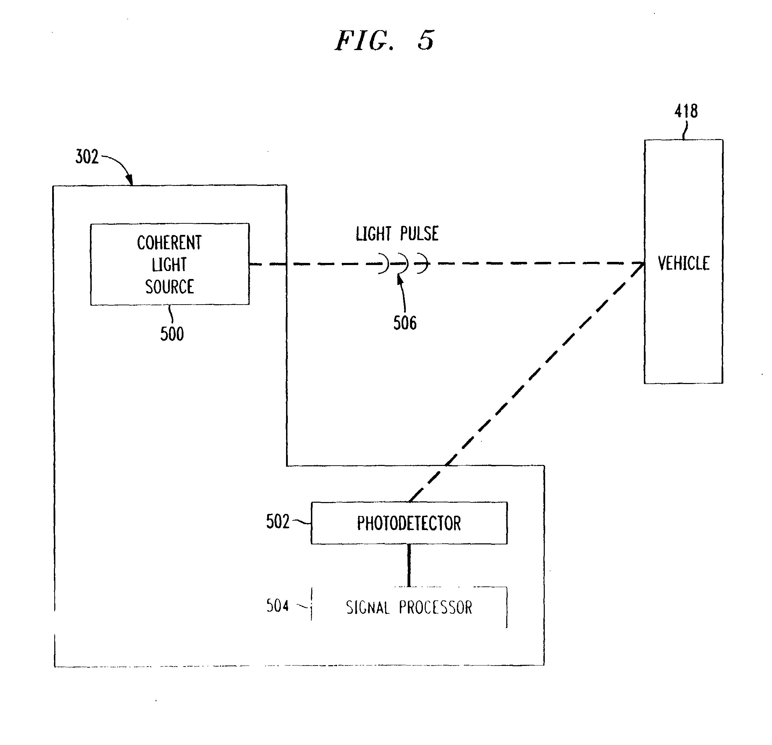

FIG. 5 is a simplified block diagram of the preferred embodiment of position detector 302. The preferred embodiment of position detector 302 comprises coherent light source 500, photodetector 502, and signal processor 504. After motion is detected by velocity detector 300 as described above, the distance from the wireless parking meter to vehicle 418 is determined by position detector 302. Coherent light source 500 emits light pulse 506 toward vehicle 418 in the designated parking space. The time it takes for light pulse 506 to travel from coherent light source 500 to vehicle 418 and then to photodetector 502 is proportional to distance traveled by light pulse 506. Therefore, position detector 302 determines the distance between vehicle 418 and position detector 302 by measuring the elapsed time from emission of light pulse 506 until light pulse 506 is received at photodetector 502. Signal processor 504, which is coupled to photodetector 502, then calculates the distance to vehicle 418, which distance is proportional to the elapsed time for light pulse 506 to travel from coherent light source to photodetector 502. A condition that is necessary, but not sufficient, for detection of a vehicle entering, being present in, and leaving the designated parking space is that the distance between position detector 302 and vehicle 506 is between a predetermined minimum value and a predetermined maximum value.

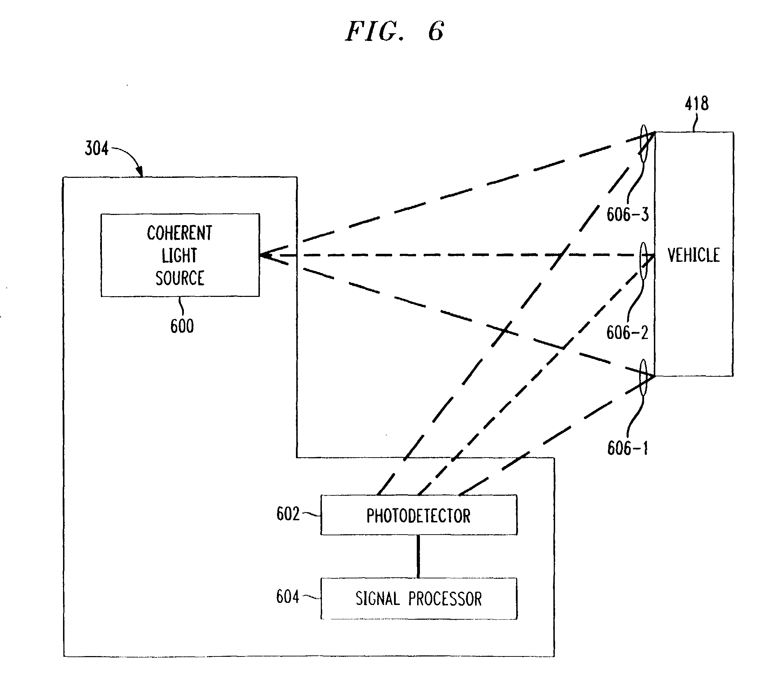

FIG. 6 is a simplified block diagram of the preferred embodiment of size detector 304. The preferred embodiment of size detector 304 comprises coherent light source 600, photodetector 602, and signal processor 604. In a real environment, waves 606-1, 606-2, and 606-3 are reflected from each part of a vehicle back to photodetector 602. Each wave 606-1, 606-2, and 606-3 travels a different distance. Although a plurality of light waves are used, only three light waves have been depicted in FIG. 6 in order to simplify FIG. 6.

The size of vehicle 418 is proportional to the interval between the arrival of the first reflection 606-1 and the arrival of the last reflection 606-3. Signal processor 604, which is coupled to photodetector 602, then calculates the size of vehicle 418, which size is proportional to the elapsed time between the arrival of wave 606-1 and wave 606-3 at photodetector 602. To eliminate reflections from non-target objects in the environment, a profile of the reflected signal measured with no vehicle present is subtracted from the reflected profile obtained while testing the size of vehicle 418. A condition that is necessary, but not sufficient, for detection of a vehicle entering, being present in, and leaving the designated parking space is that the distance between position detector 302 and vehicle 506 is between a predetermined minimum value and a predetermined maximum value.

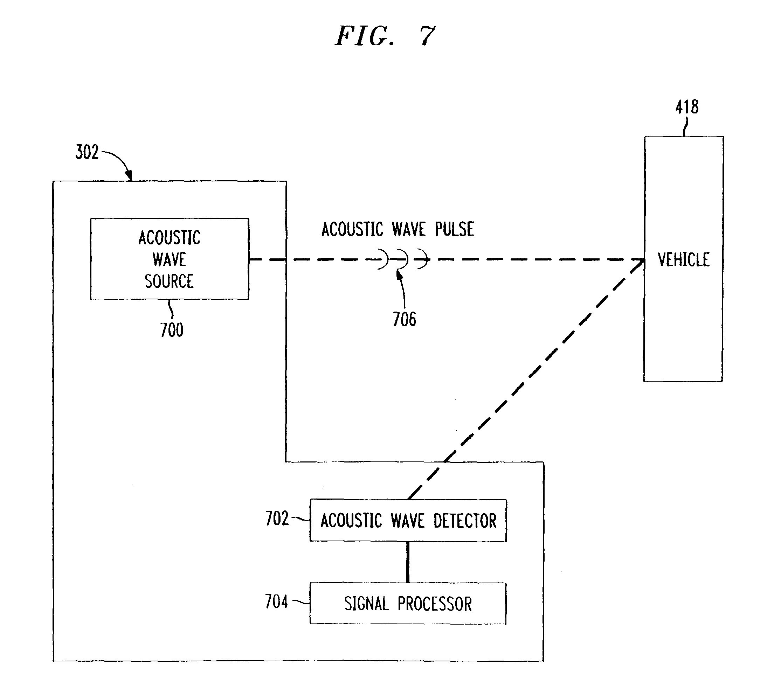

FIG. 7 is a simplified block diagram of an alternate embodiment of position detector 302. The alternate embodiment of position detector 302 comprises acoustic wave source 700, acoustic wave detector 702, and signal processor 704. The alternate embodiment of position detector 302, shown in FIG. 7, operates similarly to the preferred embodiment of position detector 302, shown in FIG. 5. Whereas the preferred embodiment uses light pulse 506, the alternate embodiment uses acoustic wave pulse 706 generated by acoustic wave source 700 and detected by acoustic wave detector 702. Further, in the alternative embodiment shown in FIG. 7, a thermometer (not shown) measures the ambient air temperature and signal processor 704 compensates for the change in the velocity of acoustic waves as a function of the measured ambient air temperature.

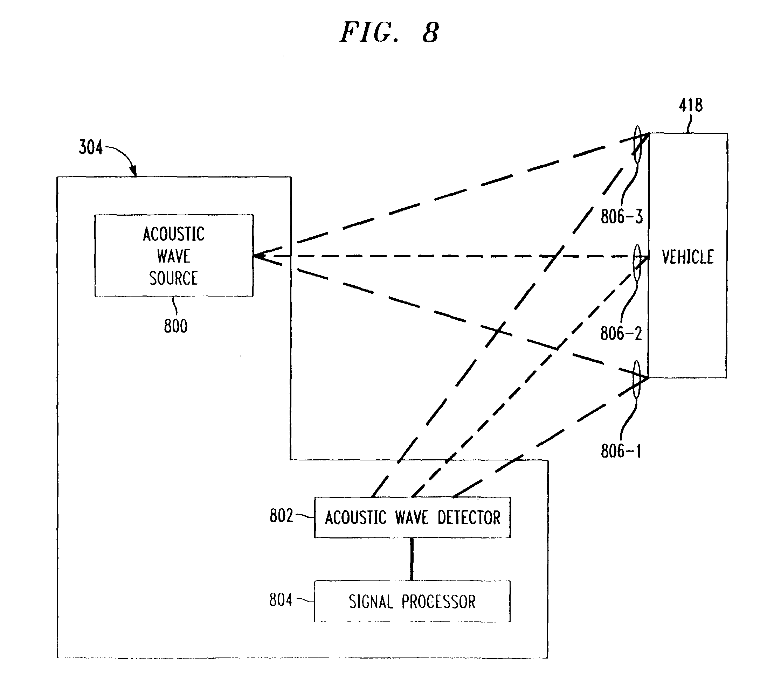

FIG. 8 is a simplified block diagram of an alternate embodiment of size detector 304. The alternate embodiment of size detector 304 comprises acoustic wave source 800, acoustic wave detector 802, and signal processor 804. The alternate embodiment of size detector 304, shown in FIG. 8, operates similarly to the preferred embodiment of size detector 304, shown in FIG. 6. Whereas the preferred embodiment uses light waves 606-1, 606-2, and 606-3, the alternate embodiment uses acoustic wave pulses 806-1, 806-2, and 806-3 generated by acoustic wave source 800 and detected by acoustic wave detector 802. Further, in the alternative embodiment shown in FIG. 8, a thermometer (not shown) measures the ambient air temperature and signal processor 804 compensates for the change in the velocity of acoustic waves as a function of the measured ambient air temperature.

As will be apparent to those skilled in the art, although coherent light sources 400, 500, and 600 have been assigned separate reference numerals, one or more coherent light sources could be used to perform the functions described in conjunction with the discussion of FIGs. 4, 5, and 6. The same is true both for photodetectors 406, 502, and 602 and for signal processors 408, 504, 604, 704, and 804. Similarly, although acoustic wave sources 700 and 800, and acoustic wave detectors 702 and 802 have been assigned separate reference numerals, one or more acoustic wave sources and one or more acoustic wave detectors could be used to perform the functions described in conjunction with the discussion of FIGs. 7 and 8.

As will be apparent to those skilled in the art, vehicle detector 204 could comprise a magnetic anomaly detector, an optical sensor, a passive identification module in a vehicle and an active module to sense the presence of the passive identification module in the designated parking space, a weight sensor, and other appropriate means for detecting the presence of a vehicle in a designated parking space without departing from the scope of this invention. Similarly, it will be apparent to those skilled in the art that alternatives power sources, such as solar power, or a windmill, could be used to power wireless parking meters 100 without departing from the scope of this invention.

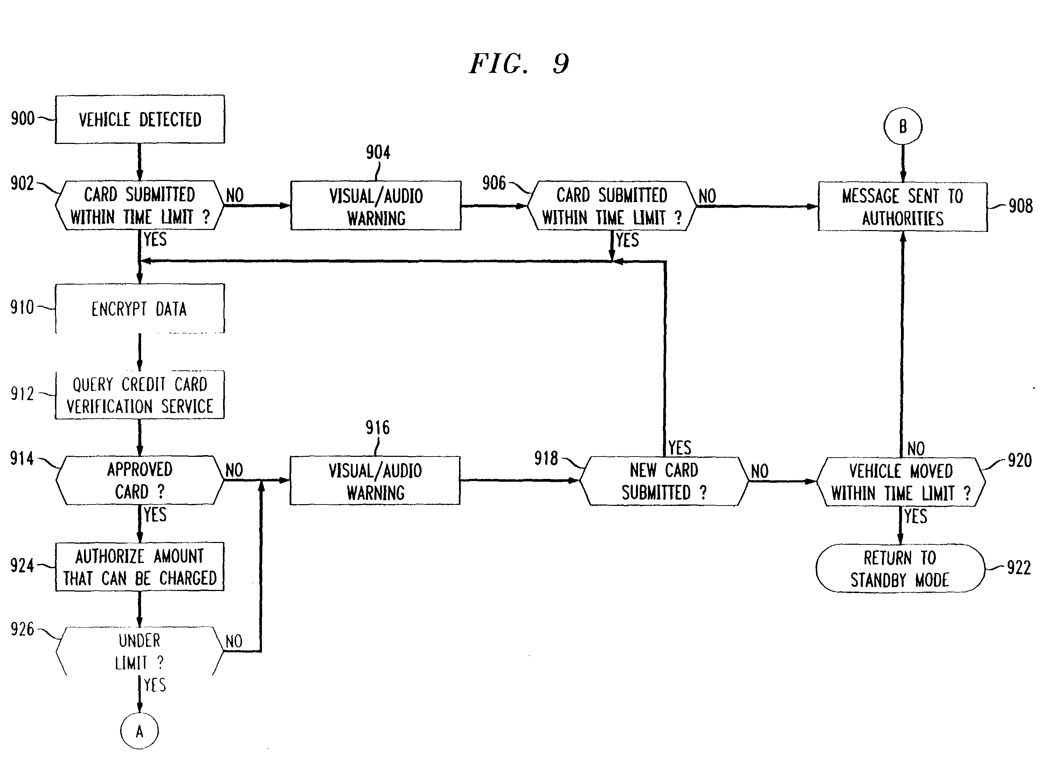

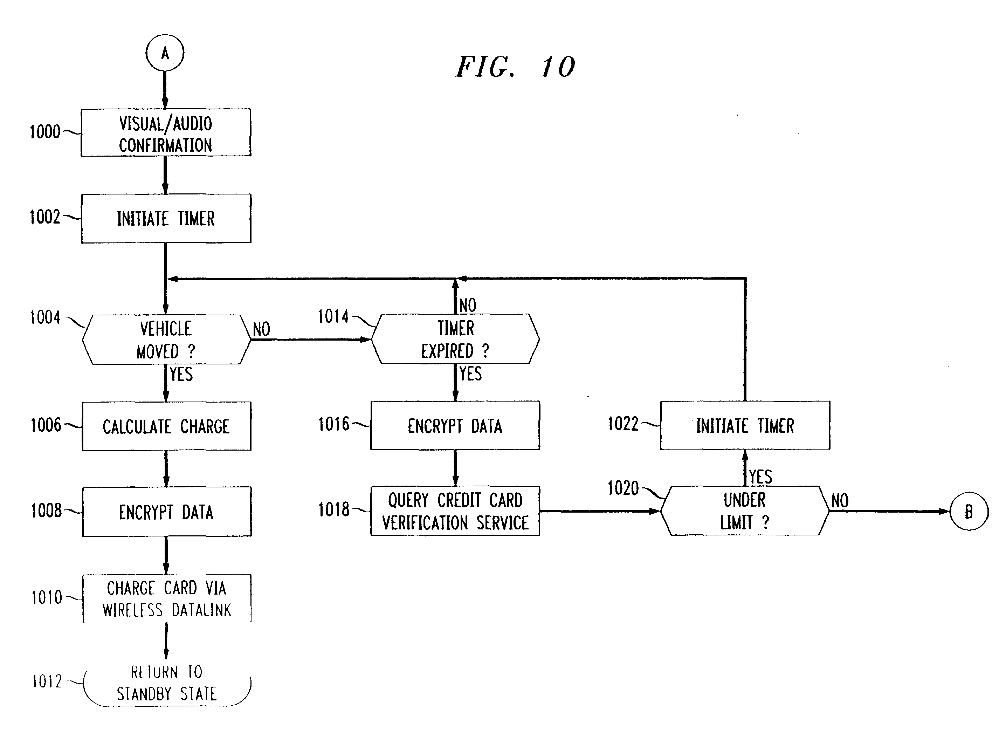

FIG. 9 and FIG. 10 are a simplified flow chart showing some of the basic functions performed by the wireless parking meter of this invention. Once vehicle detector 204 detects the presence of a vehicle in the designated parking space, as depicted in block 900 in FIG. 9, processor 210 determines whether a payment card has been submitted within a predetermined timeout period, as depicted at 902. FIGs. 9 and 10 illustrate operation of wireless parking meter 100 assuming payment is not made using currency. Operation of wireless parking meter 100 when payment is made using currency is discussed below.

If no payment card submitted within the predetermined timeout period, a visual/audio warning is displayed by audio/visual user interface 208, as depicted at 904. After providing the visual/audio warning, processor 210 again queries payment acceptor 206 to determine whether a payment card has been submitted, as depicted at 906. If no payment card has been submitted, then a notification message is sent indicating that unauthorized parking is occurring, as depicted at 908.

If a card has been submitted within either of the timeouts tested at 902 and 906, then payment information is encrypted, as shown at 910, and credit card verification services are queried, as shown at 912, which query is transmitted from wireless parking meter 100 via radio transmitter and receiver 200 to radio base station 104. As will be apparent to those of ordinary skill in the art, encryption may be performed by processor 210 or by use of an additional encryptor module, not shown in FIG. 2. Radio base station 104 sends the encrypted payment information to mobile switching center 106, which, in turn, sends the information to credit validation server 112. Credit validation server then responds to wireless parking meter 100 through mobile switching center 106, radio base station 104 and radio transmitter and receiver with notification of an available line of credit or that the card is not approved for payment.

If the payment card is not approved, a visual/audio warning is provided, as depicted at 914 and 916. The visual/audio warning may also provide instructions via audio/visual user interface that a different payment card should be used. If a different card is used for payment, the steps previously described for the first card are performed, as depicted by 918, 910, 912, and 914. If no new payment card is submitted and the vehicle has not moved from the designated parking space within a predetermined timeout period, then a notification message is sent to the operator and/or owner of the parking space to indicate that unauthorized parking is occurring, as shown at 918, 920, and 908. If no new payment card is submitted and the vehicle has moved from the designated parking space within a predetermined timeout period, then wireless parking meter 100 returns to standby mode, as shown at 922, in which it continuously tries to detect the presence of a vehicle in the designated parking space.

If the payment card originally used is approved by credit validation server 112, an amount that can be charged to the payment card is authorized, as shown at 924. The amount that can be charged can vary during different times of the day and on different days of the week based on factors such as the maximum allowable parking time and the rate at which parking fees are generated at various times of the day.

If the authorized amount that can be charged is above the payment card's available funds, then a visual/audio warning is provided and processing proceeds in the manner described previously, as shown at 926, 916, and 918. If the authorized amount that can be charged is less than or equal to the payment card's available funds, then a visual/audio confirmation is provided, as indicated at 1000 in FIG. 10, indicating that the payment method selected has been accepted. After providing the visual/audio confirmation, timer 212 is initiated, as shown at 1002, to keep track of how long a vehicle is parked in the designated parking space.

After initiating timer 212, processor 210 queries vehicle detector 204 and timer 212 to determine whether the vehicle has left the designated parking space or whether the maximum allowable parking time has been exceeded, as depicted at 1004 and 1006.

If the vehicle leaves the designated parking space before the maximum allowable time allowed for parking expires, then a parking charge is calculated, payment data is again encrypted, the selected payment card is charged via the wireless data link previously discussed, and wireless parking meter 100 returns to standby state, as depicted at 1004, 1006, 1008, 1010, and 1012.

If the maximum allowable time for parking expires before the vehicle departs from the designated parking space, payment data is encrypted and credit card validation server is queried, as depicted at 1014, 1016, and 1018. If the amount that can be charged to the payment card is less than or equal to the limit of available funds as reported by credit validation server 112, timer 212 is initiated, and processor 210 queries vehicle detector 204 and timer 212 to determine when the vehicle leaves the designated parking space or when the maximum allowable parking time expires, as depicted at 1020, 1022, 1004, and 1014. If the amount that can be charged to the payment card is greater than the limit of available funds as reported by credit validation server 112, an unauthorized parking notification message is sent to the owner or operator of the designated parking space, as depicted at 1020 in FIG. 10 and at 908 in FIG. 9.

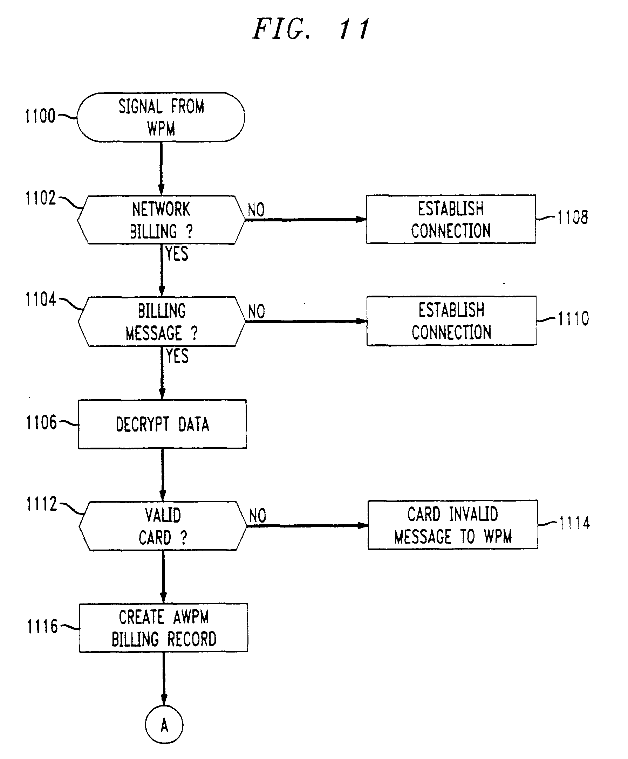

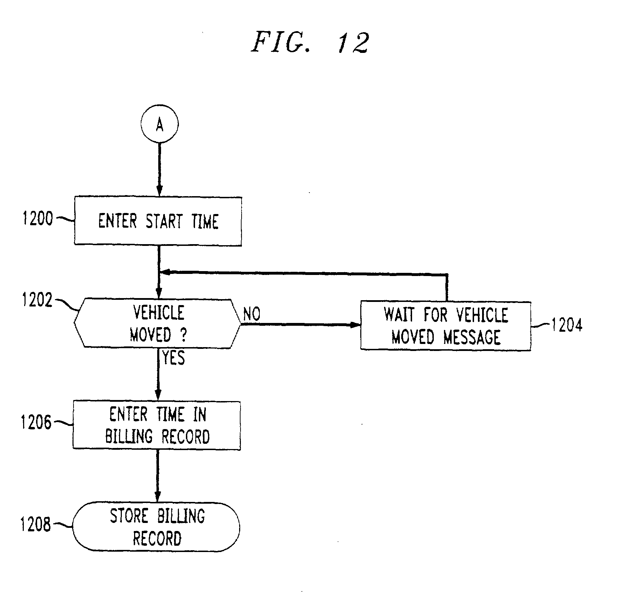

An alternative to credit or debit card payment is payment using a telephone calling card. Because of the potentially large number of wireless parking meters deployed and the resulting complexity of managing the billing, it may be desirable to integrate billing into the publicly switched telephone network. This payment option would allow local exchange carriers to exploit a core competency and create new business opportunities. Billing control logic and payment records could be maintained at mobile switching center 106. FIGs. 11 and 12 depict some of the steps performed at mobile switching center 106 according to this invention. When mobile switching center 106 receives a billing message indicating network billing from a wireless parking meter 100, mobile switching center 106 decrypts the encrypted payment data, as shown at 1100, 1102, 1104, and 1106. If any other type of message is received from a wireless parking meter 100, mobile switching center establishes a connection, as depicted at 1108 and 1110, to a billing center 108-1 or 108-2, credit validation server 112, or government or corporate administration facilities 114, depending upon the nature of the message received.

If the telephone calling card used for payment is invalid, an invalid card message is sent to wireless parking meter 100, as depicted at 1112 and 1114. If the telephone calling card used for payment is valid, mobile switching center 106 creates a parking billing record, records the time at which parking has begun, and waits for the vehicle to depart from the designated parking space, as depicted at 1112 and 1116 in FIG. 11 and at 1200, 1202, and 1204 in FIG. 12. Once the vehicle has departed from the designated parking space, the time at which the vehicle departed is stored in the billing record and the billing record is stored, as depicted at 1206 and 1208.

As will be apparent to those skilled in the art, payment via U.S. currency may be accepted greatly simplifying the control logic depicted in FIGs 9 and 10 by removing all blocks related to encrypting, decrypting, and verifying payment card validity and available funds.

While a preferred embodiment of this invention has been described, the scope of this invention is to be limited only by the following claims and their equivalents.

## Claims

1. A parking meter comprising:
a vehicle detector (204),
a processor (210) coupled to and responsive to said vehicle detector;
wherein said processor calculates an appropriate parking fee for a vehicle in response to a detection by said vehicle detector that a vehicle has departed a parking space
a radio transmitter (200) coupled to and responsive to said processor;
a radio receiver (200) coupled to and responsive to said processor; and
means (206) for accepting payment coupled to and responsive to said processor.

2. The meter of claim 1, wherein said vehicle detector comprises either:
a velocity detector (300);
a position detector (302); and
a size detector (304), or
a magnetic anomaly detector, or
means for optically sensing the presence of a vehicle, or
a passive identification module mounted to a vehicle the presence of which is to be sensed; and
an active detector module to sense the presence of said passive identification module, or
a weight sensor.

3. The meter of claim 2, wherein said velocity detector comprises:
a coherent light source (400);
a reflector (404);
a beam splitter (402) for splitting light waves emitted by said coherent light source toward said reflector and toward an area in which the velocity of an object will be measured;
a photo detector (406), and a
signal processor (408) coupled to and responsive to said photodetector.

4. The meter of claim 2, wherein said position detector comprises;
either a coherent light source;
a photo detector positioned such that a light pulse emitted by said coherent light source and reflected by anything present in a designated parking area will be detected by said photo detector; and
a signal processor coupled to and responsive to said photo detector, or
an acoustic wave source;
an acoustic wave detector positioned such that an acoustic wave pulse emitted by said acoustic wave source and reflected by anything present in a designated parking area will be detected by said acoustic wave detector; and
a signal processor coupled to and responsive to said acoustic wave detector.

5. The meter of claim 2, wherein said size detector comprises:
either a coherent light source;
a photo detector positioned such that a plurality of light waves emitted from said coherent light source will be reflected by anything present in a designated parking area and detected at different times at said photo detector; and
a signal processor coupled to and responsive to said photo detector, or
an acoustic wave source;
an acoustic wave detector positioned such that a plurality of acoustic waves emitted from said coherent light source will be reflected by anything present in a designated parking area and detected at different times at said acoustic wave detector; and
a signal processor coupled to and responsive to said acoustic wave detector.

6. The meter of claim 1, wherein said means for accepting payment comprises:
either a magnetic card reader, or
an encryptor for encrypting payment account data to be transmitted by said wireless transmitter, or
a currency acceptor.

7. The meter of claim 1 further comprising:
a user interface, such as selected from a liquid crystal display; an analog timer display, and an audio notification, or
further comprising a solar power source.

8. A method for metering a parking space comprising the steps of:
automatically detecting the presence of a vehicle in a designated parking space; accepting at least one payment method for parking in said designated parking space;
measuring elapsed time that said vehicle is present in said designated parking space;
detecting said vehicle's departure from said designated parking space; calculating, in response to a detection that said vehicle has departed said designated parking space, an appropriate parking fee for said vehicle in said designated parking space; and
sending a notification message upon either invalid payment or upon other unauthorized parking in said designated parking space.

9. The method of claim 8, wherein the step of accepting at least one payment method comprises the steps of:
providing information regarding available payment options for parking in said designated parking space;
encrypting confidential payment information; and
verifying the validity of the payment option selected.

10. Apparatus for metering a parking space comprising:
means (204) for automatically detecting the presence of a vehicle in a designated parking space;
means (206) for accepting at least one payment method for parking in said designated parking space;
means for measuring elapsed time that said vehicle is present in said designated parking space;
means (210) or detecting said vehicle's departure from said designated parking space;
means for calculating, in response to a detection that said vehicle has departed said designated parking space, an appropriate parking fee for said vehicle in said designated parking space;
means for sending a notification message upon either invalid payment or upon other unauthorized parking in said designated parking space.

11. The apparatus of claim 10, wherein said means for accepting at least one payment method comprises:
means for providing information regarding available payment options for parking in said designated parking space;
means for encrypting confidential payment information; and
means for verifying the validity of the payment option selected.

## Patentansprüche

1. Parkuhr mit folgenden Merkmalen:
ein Fahrzeugdetektor (204),
ein Prozessor (210), der mit dem Fahrzeugdetektor gekoppelt ist und auf diesen anspricht, wobei der Prozessor in Reaktion auf ein Erkennen durch den Fahrzeugdetektor, daß ein Fahrzeug von einem Parkplatz weggefahren ist, eine entsprechende Parkgebühr für ein Fahrzeug berechnet,
ein Funksender (200), der mit dem Prozessor gekoppelt ist und auf diesen anspricht,
ein Funkempfänger (200), der mit dem Prozessor gekoppelt ist und auf diesen anspricht, und
eine Zahlungsannahmeeinrichtung (206), die mit dem Prozessor gekoppelt ist und auf diesen anspricht.

2. Parkuhr nach Anspruch 1, bei welcher der Fahrzeugdetektor folgendes umfaßt:
entweder einen Geschwindigkeitsdetektor (300), einen Positionsdetektor (302) und einen Größendetektor (304);
oder einen Detektor für magnetische Anomalie;
oder eine Einrichtung zum optischen Erfassen des Vorhandenseins eines Fahrzeugs;
oder ein passives Identifizierungsmodul, das an einem Fahrzeug befestigt ist, dessen Vorhandensein erfaßt werden soll, und ein aktives Detektormodul, um das Vorhandensein des passiven Identifizierungsmoduls zu erfassen;
oder einen Gewichtssensor.

3. Parkuhr nach Anspruch 2, bei welcher der Geschwindigkeitsdetektor folgendes umfaßt:
eine Quelle für kohärentes Licht (400),
einen Reflektor (404),
einen Strahlteiler (402), um die von der Quelle für kohärentes Licht emittierten Lichtwellen in Richtung auf den Reflektor und in Richtung eines Bereichs, in welchem die Geschwindigkeit eines Objektes gemessen wird, aufzuspalten,
einen Photodetektor (406), und
einen Signalprozessor (408), der mit dem Photodetektor gekoppelt ist und auf diesen anspricht.

4. Parkuhr nach Anspruch 2, bei welcher der Positionsdetektor folgendes umfaßt:
entweder eine Quelle für kohärentes Licht, einen Photodetektor, der so angeordnet ist, daß ein von der Quelle für kohärentes Licht emittierter und durch irgend etwas in einem bezeichneten Parkbereich Vorhandenes reflektierter Lichtpuls von dem Photodetektor erfaßt wird, und einen Signalprozessor, der mit dem Photodetektor gekoppelt ist und auf diesen anspricht;
oder eine Quelle für Schallwellen, einen Detektor für Schallwellen, der so angeordnet ist, daß ein von der Quelle für Schallwellen emittierter und durch irgend etwas in einem bezeichneten Parkbereich Vorhandenes reflektierter Schallwellenpuls von dem Schallwellendetektor erfaßt wird, und einen Signalprozessor, der mit dem Schallwellendetektor gekoppelt ist und auf diesen anspricht.

5. Parkuhr nach Anspruch 2, bei welcher der Größendetektor folgendes umfaßt:
entweder eine Quelle für kohärentes Licht, einen Photodetektor, der so angeordnet ist, daß mehrere von der Quelle für kohärentes Licht emittierte Lichtwellen durch irgend etwas in einem bezeichneten Parkbereich Vorhandenes reflektiert werden und zu unterschiedlichen Zeitpunkten an dem Photodetektor erfaßt werden, und einen Signalprozessor, der mit dem Photodetektor gekoppelt ist und auf diesen anspricht;
oder eine Quelle für Schallwellen, einen Detektor für Schallwellen, der so angeordnet ist, daß mehrere von der Schallwellenquelle emittierte Schallwellen durch irgend etwas in einem bezeichneten Parkbereich Vorhandenes reflektiert werden und zu unterschiedlichen Zeitpunkten an dem Schallwellendetektor erfaßt werden, und einen Signalprozessor, der mit dem Schallwellendetektor gekoppelt ist und auf diesen anspricht.

6. Parkuhr nach Anspruch 1, bei welcher die Zahlungsannahmeeinrichtung folgendes umfaßt:
entweder eine Magnetkarten-Leseeinrichtung;
oder eine Verschlüsselungseinrichtung zum Verschlüsseln von Zahlkontendaten, die von dem drahtlosen Sender gesendet werden sollen;
oder eine Geldannahmeeinrichtung.

7. Parkuhr nach Anspruch 1, welche ferner umfasst:
eine Benutzerschnittstelle, wie sie beispielsweise von einem Flüssigkristalldisplay ausgewählt werden kann, eine analoge Zeitanzeige und einen akustischen Melder,
oder welche ferner eine Solarstromquelle beinhaltet.

8. Verfahren zur Bemessung eines Parkplatzes, welches folgende Schritte beinhaltet:
Automatisches Erfassen des Vorhandenseins eines Fahrzeugs auf einem bezeichneten Parkplatz;
Akzeptieren wenigstens eines Zahlverfahrens für das Parken auf dem bezeichneten Parkplatz;
Messen der abgelaufenen Zeit, während der das Fahrzeug auf dem bezeichneten Parkplatz vorhanden ist;
Erfassen der Abfahrt des Fahrzeugs von dem bezeichneten Parkplatz;
Berechnen einer entsprechenden Parkgebühr für das Fahrzeug auf dem bezeichneten Parkplatz in Reaktion auf ein Erfassen, daß das Fahrzeug von dem bezeichneten Parkplatz abgefahren ist; und
Senden einer Meldenachricht bei entweder ungültiger Zahlung oder bei anderem unautorisierten Parken auf dem bezeichneten Parkplatz.

9. Verfahren nach Anspruch 8, wobei der Schritt des Akzeptierens wenigstens eines Zahlverfahrens folgende Schritte umfaßt:
Bereitstellen von Informationen bezüglich verfügbarer Zahlungsoptionen für das Parken auf dem bezeichneten Parkplatz;
Verschlüsseln vertraulicher Zahlungsinformationen; und
Überprüfen der Gültigkeit der gewählten Zahlungsoption.

10. Gerät zum Bemessen eines Parkplatzes mit folgenden Merkmalen:
eine Einrichtung (204) zum automatischen Erfassen des Vorhandenseins eines Fahrzeugs auf einem bezeichneten Parkplatz;
eine Einrichtung (206) zum Akzeptieren wenigstens eines Zahlverfahrens für das Parken auf dem bezeichneten Parkplatz;
eine Einrichtung zum Messen der abgelaufenen Zeit, während der das Fahrzeug auf dem bezeichneten Parkplatz vorhanden ist;
eine Einrichtung (210) zum Erfassen der Abfahrt des Fahrzeugs von dem bezeichneten Parkplatz;
eine Einrichtung zum Berechnen einer entsprechenden Parkgebühr für das Fahrzeug auf dem bezeichneten Parkplatz in Reaktion auf ein Erfassen, daß das Fahrzeug von dem bezeichneten Parkplatz abgefahren ist;
eine Einrichtung zum Senden einer Meldenachricht bei entweder ungültiger Zahlung oder bei anderem unautorisierten Parken auf dem bezeichneten Parkplatz.

11. Gerät nach Anspruch 10, bei welchem die Einrichtung zum Akzeptieren wenigstens eines Zahlverfahrens folgendes umfaßt:
eine Einrichtung zum Bereitstellen von Informationen bezüglich verfügbarer Zahlungsoptionen für das Parken auf dem bezeichneten Parkplatz;
eine Einrichtung zum Verschlüsseln vertraulicher Zahlungsinformationen; und
eine Einrichtung zum Überprüfen der Gültigkeit der gewählten Zahlungsoption.

## Revendications

1. Parcmètre comprenant :
un détecteur de véhicule (204) ;
un processeur (210) relié et sensible audit détecteur de véhicule ;
dans lequel ledit processeur calcule un tarif de stationnement approprié pour un véhicule en réponse à une détection effectuée par le détecteur de véhicule selon laquelle un véhicule a quitté un espace de stationnement ;
un émetteur radio (200) relié et sensible au processeur ;
un récepteur radio (200) relié et sensible au processeur ; et
un moyen (206) pour accepter un paiement relié et sensible au processeur.

2. Parcmètre suivant la revendication 1, dans lequel le détecteur de véhicule comprend soit :
un détecteur de vitesse (300),
un détecteur de position (302) ; et
un détecteur de taille (304) ; soit
un détecteur d'anomalie magnétique, soit
un moyen destiné à détecter optiquement la présence d'un véhicule, soit
un module d'identification passif monté sur un véhicule dont la présence doit être détectée ; et
un module détecteur actif pour détecter la présence du module d'identification passif, soit
un capteur de poids.

3. Parcmètre suivant la revendication 2, dans lequel le détecteur de vitesse comprend :
une source de lumière cohérente (400) ;
un réflecteur (404) ;
une séparatrice de faisceaux (402) destinée à séparer des ondes lumineuses émises par la source de lumière cohérente vers le réflecteur et vers une zone dans laquelle la vitesse d'un objet sera mesurée
un photodétecteur (406) ; et
un processeur de signal (408) relié et sensible au photodétecteur.

4. Parcmètre suivant la revendication 2, dans lequel le détecteur de position comprend :
soit une source de lumière cohérente ;
un photodétecteur positionné de telle façon qu'une impulsion de lumière émise par la source de lumière cohérente et réfléchie par tout objet présent dans une zone de stationnement désignée sera détectée par le photodétecteur ; et
un processeur de signal relié et sensible au photodétecteur, soit
une source d'ondes acoustiques ;
un détecteur d'ondes acoustiques positionné de telle façon qu'une impulsion d'ondes acoustiques émise par la source d'ondes acoustiques et réfléchie par tout objet présent dans une zone de stationnement désignée sera détectée par le détecteur d'ondes acoustiques ; et
un processeur de signal relié et sensible au détecteur d'ondes acoustiques.

5. Parcmètre suivant la revendication 2, dans lequel détecteur de taille comprend :
soit une source de lumière cohérente ;
un photodétecteur positionné de telle façon qu'une pluralité d'ondes lumineuses émises par la source de lumière cohérente soient réfléchies par tout objet présent dans une zone de stationnement désignée et soient détectées à des instants différents sur le photodétecteur ; et
un processeur de signal relié et sensible au photodétecteur, soit
une source d'ondes acoustiques ;
un détecteur d'ondes acoustiques positionné de telle façon qu'une pluralité d'ondes acoustiques émises par la source de lumière cohérente soient réfléchies par tout objet présent dans une zone de stationnement désignée et soient détectées à des instants différents sur le détecteur d'ondes acoustiques ; et
un processeur de signal relié et sensible au détecteur d'ondes acoustiques.

6. Parcmètre suivant la revendication 1, dans lequel le moyen destiné à accepter un paiement comprend :
soit un lecteur de carte magnétique, soit
un dispositif de cryptage pour crypter des données de compte de paiement devant être émises par l'émetteur sans fil, soit
un dispositif d'acceptation de monnaie.

7. Parcmètre suivant la revendication 1, comprenant :
une interface utilisateur, par exemple sélectionnée sur un afficheur à cristaux liquides; un affichage de compteur de temps analogique, et un avertissement audio, soit
comprenant en outre une source d'énergie solaire.

8. Procédé de comptage pour aire de stationnement, comprenant les étapes consistant à :
détecter automatiquement la présence d'un véhicule dans une aire de stationnement désignée ;
accepter au moins une méthode de paiement pour le stationnement dans cette aire de stationnement désignée ;
mesurer un temps écoulé pendant lequel le véhicule a été présent dans cette aire de stationnement désignée ;
détecter le départ du véhicule de l'aire de stationnement désignée ;
calculer, en réponse à une détection selon laquelle le véhicule a quitté l'aire de stationnement désignée, un tarif de stationnement approprié pour le véhicule dans cette aire de stationnement désignée ; et
envoyer un message de notification lors d'un paiement invalide ou lors d'un autre stationnement non autorisé dans l'aire de stationnement désignée.

9. Procédé suivant la revendication 8, dans lequel l'étape d'acceptation d'au moins une méthode de paiement comprend les étapes consistant à :
fournir des informations concernant des options de paiement disponibles pour le stationnement dans l'aire de stationnement désignée ;
crypter des informations de paiement confidentielles ; et
vérifier la validité de l'option de paiement sélectionnée.

10. Appareil de comptage pour aire de stationnement, comprenant :
un moyen (204) destiné à détecter automatiquement la présence d'un véhicule dans une aire de stationnement désignée ;
un moyen (206) pour accepter au moins une méthode de paiement pour le stationnement dans l'aire de stationnement désignée ;
un moyen pour mesurer le temps de présence du véhicule dans l'aire de stationnement désignée ;
un moyen (210) pour détecter le départ du véhicule de l'aire de stationnement désignée ;
un moyen pour calculer, en réponse à la détection du fait que le véhicule a quitté l'aire de stationnement désignée, un tarif de stationnement approprié pour le véhicule dans l'aire de stationnement désignée ;
un moyen destiné à envoyer un message de notification lors soit d'un paiement invalide, soit d'un stationnement non autorisé dans l'aire de stationnement désignée.

11. Appareil suivant la revendication 10, dans lequel le moyen destiné à accepter au moins une méthode de paiement comprend:
un moyen destiné à fournir des informations concernant des options de paiement disponibles pour le stationnement dans l'aire de stationnement désignée ;
un moyen destiné à crypter des informations de paiement confidentielles ; et
un moyen destiné à vérifier la validité de l'option de paiement sélectionnée.
